# EUROPEAN PATENT APPLICATION

(11) **EP 1 302 338 A1**
(43) Date of publication of application: **16.04.2003**
(21) Application number: 02257016.2
(22) Date of filing: 09.10.2002
(51) Int. Cl.: B60C 23/02

(54) **Pressure indicating device for a tubeless tyre**

(30) Priority: 15.10.2001 JP 2001317018
(71) Applicant: L & F Plastics Co., Ltd., Ta-tung distr., Taipei (TW)
(72) Inventor: Hsu, Mu-chaun, Ta-tung dist., Taipei (TW)
(74) Representative: Brown, Michael Stanley

(57) **Abstract**

A pressure indicating device (3) of a tube-less tyre (2) of a motor vehicle is on a position surrounded by the tyre and faces outwardly for ease of reading. The device comprises an integral pipe (11) formed in a rim (1) being in communication between the device and the tyre so that the pressure of the tyre is represented on the device by communicating air through the pipe. Hence, before starting the vehicle, the driver may know the condition of each tyre by visually inspecting a reading of the pressure indicating device. If the reading of one device is abnormal, the driver can take a suitable action, e.g. replacing a tyre.

## Description

### FIELD OF THE INVENTION

The present invention relates to tyres of motor vehicles and more particularly to a pressure indicating device for a tube-less tyre of a motor vehicle with improved characteristics.

### BACKGROUND TO THE INVENTION

Conventionally, tube-less tyres are used for light load motor vehicles. A rubber pad is provided along an inner hoop of such a tube-less tyre for maintaining the air-tightness of the tyre when fixed about a rim. In the case of tyre air-tightness being broken while driving, a vehicle equipped with tube-less tyres can still travel a predetermined distance without causing trouble. However, the whole wheel assembly may be damaged or a traffic accident can even be caused if the driver is not aware of the burst tyre(s).

Thus, it is desirable to provide a pressure indicating device for a tube-less tyre so that the driver can be aware of the pressure of each tyre before driving or while driving.

It is therefore an object of the present invention to provide a pressure indicating device for a tube-less tyre of a motor vehicle.

### SUMMARY OF THE INVENTION

According to one aspect of the present invention a pressure indicating device for a tube-less tyre of a motor vehicle comprises a display on a position surrounded by the tyre and facing outwardly; and an integral pipe formed in a rim being in communication between the device and the tyre so that the pressure of the tyre is represented on the device by communicating air through the pipe.

According to another aspect of the present invention a pressure indicating device for a tube-less tyre of a motor vehicle comprises a display on a position surrounded by the tyre and facing outwardly; a pipe having one end in communication with the device; and a hole on a rim being in communication with the other end of the pipe so that the pressure of the tyre is represented on the device by communicating air through the hole and the pipe.

Further features of the present invention will become apparent from the following detailed description taken with the accompanying drawings.

### BRIEF DESCRIPTION OF THE DRAWINGS

FIGURE 1 is a flow chart illustrating the method of informing the driver about the pressure of a tube-less tyre according to the invention;
FIGURE 2 is a perspective view of a first preferred embodiment of a wheel with a fixed tube-less tyre incorporating a pressure indicating device according to the invention;
FIGURE 3 is a cross-sectional view of the wheel shown in FIGURE 2; and
FIGURE 4 is a cross-sectional view of a second preferred embodiment of a wheel with a fixed tube-less tyre incorporating a pressure indicating device according to the invention.

### DETAILED DESCRIPTION OF THE PREFERRED EMBODIMENTS

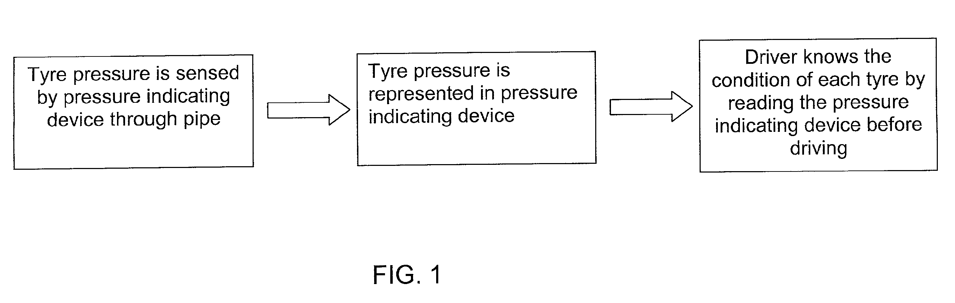

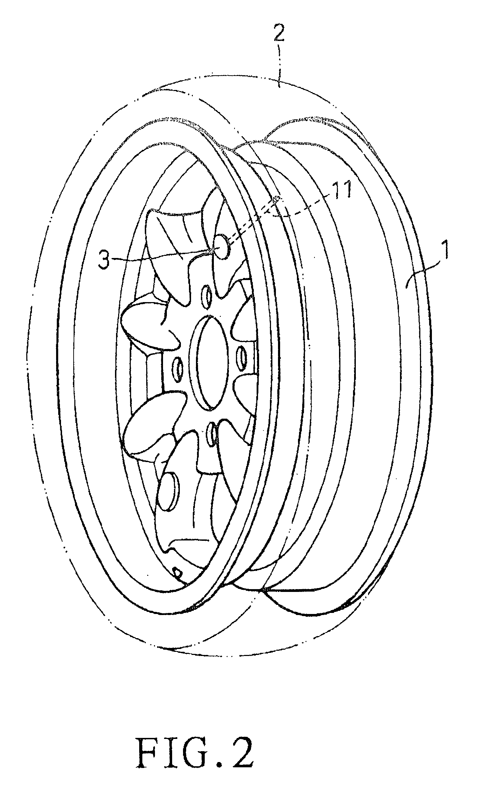

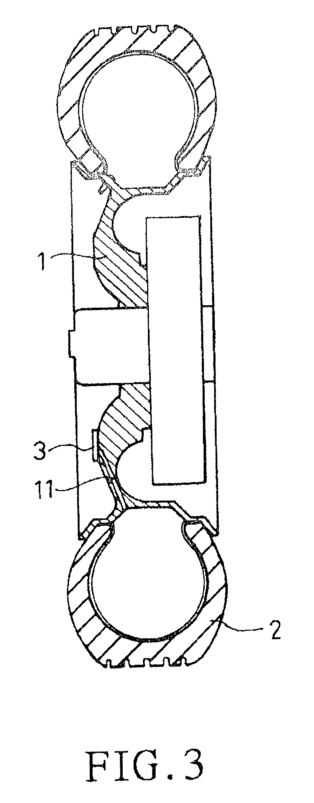

Referring to FIGURES 1 to 3, a detailed description of the invention will now be made. A wheel constructed in accordance with the invention comprises a rim 1, a tube-less tyre 2 fixed about the rim 1, and a pressure indicating device 3 (e.g., a pressure gauge in the embodiment) on an outer surface of the wheel near the hub for ease of reading. An integral pipe 11 is formed in the rim 1 and is in communication between the pressure indicating device 3 and the tyre 2.

The rim 1 includes an inner surface that is enclosed by the tube-less tyre 2 when it is fixed to the rim 1 and an outer surface adapted to be outside of the tube-less tyre 2 when it is fixed to the rim 1.

The integral pipe 11 and the rim 1 are a single piece, with the integral pipe 11 having a first end formed in the outside surface and in communication with the pressure gauge 3 and having a second end formed in the inside surface and adapted to be in communication with the tube-less tyre 2 when fixed to the rim 1 so that the pressure of the tube-less tyre 2 is represented on the gauge 3 by communicating air through the pipe.

Before starting the vehicle, the driver can know the condition of each tyre 2 by visually inspecting a reading of the gauge or other pressure indicating device 3. If the reading of one pressure indicating device 3 is abnormal (i.e., there is a leak of tyre pressure), the driver can take a suitable action, i.e., replacing the tyre, accordingly.

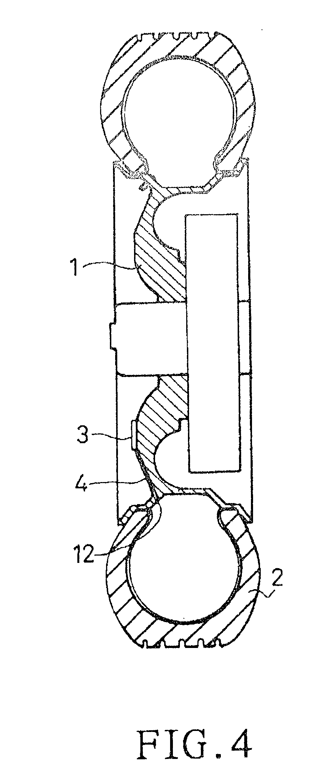

Referring to FIGURE 4, there is shown a second preferred embodiment of the invention. The difference between the first and second preferred embodiments is that the pipe 11 in the first embodiment is replaced by a pipe 4 having one end in communication with the pressure indicating device 3 and a hole 12 on the rim 1 that is in communication with the other end of the pipe 4. The method of operation of the arrangement shown in Figure 4 is as described above with reference to Figures 1 to 3.

## Claims

1. A device for indicating the pressure of a tube-less tyre of a motor vehicle, the device comprising:
a display;
a rim upon which a tube-less tyre is adapted to be fixed, with the rim including an inner surface adapted to be enclosed by the tube-less tyre when fixed to the rim and including an outer surface adapted to be outside of the tube-less tyre when fixed to the rim; and
an integral pipe formed in the rim, with the integral pipe and the rim being a single piece, with the integral pipe having a first end formed in the outside surface and in communication with the display and having a second end formed in the inside surface and adapted to be in communication with the tube-less tyre when fixed to the rim so that the pressure of the tube-less tyre is represented on the display by communicating air through the pipe.

2. The device of claim 1, wherein the display is a pressure gauge.

3. The device of claim 1, wherein the display is located on a position surrounded by the tube-less tyre and faces outwardly.

4. A device for indicating the pressure of a tube-less tyre of a motor vehicle, the device comprising:
a display;
a pipe having one end in communication with the display;
a rim upon which a tube-less tyre is adapted to be fixed, with the rim including an inner surface adapted to be enclosed by the tube-less tyre when fixed to the rim and including an outer surface adapted to be outside of the tube-less tyre when fixed to the rim; and
a hole on the rim, with the hole and the rim being a single piece, with the hole having a first end formed in the outside surface and in communication with the other end of the pipe and having a second end formed in the inside surface and adapted to be in communication with the tube-less tyre when fixed to the rim so that the pressure of the tube-less tyre is represented on the display by communicating air through the hole and the pipe.

5. The device of claim 4, wherein the display is a pressure gauge.

6. The device of claim 4, wherein the display is located on a position surrounded by the tube-less tyre and faces outwardly.
